Europäisches Patentamt

European Patent Office

Office européen des brevets

(11) Veröffentlichungsnummer: **0 459 141 A2**

# EUROPÄISCHE PATENTANMELDUNG

(21) Anmeldenummer: 91106571.2

(51) Int. Cl.5: **G05B 19/04**

(22) Anmeldetag: 24.04.91

(30) Priorität: 18.05.90 DE 4016039

(43) Veröffentlichungstag der Anmeldung:
04.12.91 Patentblatt 91/49

(84) Benannte Vertragsstaaten:
AT BE CH DE DK ES FR IT LI SE

(71) Anmelder: **Deutsche Vortex GmbH**
**Erkelenzer Strasse 34**
**W-4050 Mönchengladbach 5(DE)**

(72) Erfinder: **Schmidt, Hans-Dieter**
**Wunnensteinstrasse 16/3**
**W-7148 Remseck 3(DE)**

(74) Vertreter: **Möhrke, Dieter, Dipl.-Ing.**
**Blumenberger Strasse 143/145**
**W-4050 Mönchengladbach 1(DE)**

(54) **Arbeitsgerät mit Steuereinrichtung.**

(57) Damit das Programmieren und/oder Einstellen des Arbeitsgeräts (1) außerhalb seines Aufstellungsortes vorgenommen werden kann, ist zumindest der die Programmier- und/oder Einstellrichtungen aufweisende Teil seiner Steuereinrichtung als eine separate Baueinheit (5) ausgebildet, die an einer besonderen Anschlußstelle (4) durch eine Schnellkupplungseinrichtung mit dem Arbeitsgerät (1) lösbar verbunden ist. Die Schnellkupplungseinrichtung kann Steckkontakte aufweisen. Die kuppelbare Baueinheit (5) kann eine eigene Energieversorgungseinrichtung besitzen, so daß durch das zeitweise Entkuppeln keine Unterbrechung bestimmter Steuer- oder Regelvorgänge eintritt.

Fig.1

Die Erfindung betrifft ein Arbeitsgerät mit einer programmierbaren und/oder einstellbaren Steuereinrichtung und mit einer Anschlußstelle für Energieleitungen, die zur Versorgung des Arbeitsgerätes und gegebenenfalls auch der Steuereinrichtung für eine feste oder lösbare Verbindung zwischen einer Energieliefereinrichtung und dem Arbeitsgerät bestimmt sind.

Arbeitsgeräte, wie beispielsweise Pumpen für den Heizungs- und Sanitärbereich oder Wärmegeräte, wie beispielsweise Elektroherde, werden in zunehmendem Maß mit insbesondere elektronischen Steuereinrichtungen ausgestattet. Diese Steuereinrichtungen sind in das jeweilige Arbeitsgerät integriert.

Die Programmierung oder Einstellung der Steuergeräte muß unter Umständen öfters geändert werden, beispielsweise dann, wenn Parameter verändert werden, der zeitliche Verlauf einer Stellgröße bei sprunghafter Änderung der Regelabweichung verändert werden soll, der Drehsinn von Motoren geändert wird, die mechanische oder elektrische Leistung zu verändern ist oder dergleichen mehr.

Hierzu sind Wartungs- oder Einstellarbeiten erforderlich, die so lange kein gravierendes Problem darstellen, wie die Komponenten gut zugänglich eingebaut sind.

Probleme ergeben sich aber insbesondere dann, wenn durch den Einbauort, durch die Zuordnung des Arbeitsgerätes zu einer Anlage oder zu anderen Geräten oder dergleichen die Zugänglichkeit eingeschränkt ist. Dies ist beispielsweise häufig bei Pumpen im Heizungs- und Sanitärbereich, bei den im allgemeinen fest installierten Arbeitsgeräten im Küchenbereich und allgemein bei Geräten und Maschinen aller Art in durch Feuchtigkeit, Hitze, Staub und Gase belasteten Betrieben der Fall.

Der Erfindung liegt die Aufgabe zugrunde, hier Abhilfe zu schaffen und dafür zu sorgen, daß Einstellarbeiten und/oder Programmierarbeiten, Umstellungen und Leistungsanpassungen rasch und sicher an einem vom Aufstellungsort des Arbeitsgerätes entfernten Ort, wo für diese Arbeiten ausreichend günstige Umweltbedingungen herrschen, vorgenommen werden kann. Oft herrschen ja am Einbauort derartig ungünstige Bedingungen, daß dort aus Sicherheitsgründen Einstell- und Programmierungsarbeiten gar nicht vorgenommen werden können oder dürfen.

Gemäß der Erfindung wird diese Aufgabe dadurch gelöst, daß zumindest der die Programmier- und/oder Einstelleinrichtungen aufweisende Teil der Steuereinrichtung als eine separate Baueineit ausgebildet und an einer weiteren Anschlußstelle durch eine Schnellkupplungseinrichtung mit dem Arbeitsgerät lösbar verbunden ist.

Wenn nun an dem Arbeitsgerät die Programmierung oder Einstellung geändert werden soll, ist es lediglich erforderlich, die Baueinheit zu entkuppeln und durch eine andere bereits anders programmierte beziehungsweise eingestellte Baueinheit gleicher Art zu ersetzen, oder die entnommene Baueinheit dort, wo genügend Licht vorhanden ist und günstige Umweltbedingungen herrschen, umzustellen beziehungsweise anders einzustellen und zu programmieren und dann wieder an das Arbeitsgerät anzukuppeln.

In Weiterbildung der Erfindung ist vorgesehen, daß die Schnellkupplungseinrichtung Steckkontakte aufweist.

In manchen Fällen ist es besser, wenn anläßlich der Wartungs- und Umstellungsarbeiten die Energieversorgung wichtiger Teile der Baueinheit nicht unterbrochen wird. Die Baueinheiten können beispielsweise Mikroprozessoren, Schaltuhren oder dergleichen enthalten, die entweder keine Unterbrechung der Stromversorgung dulden oder bei denen es besser ist, wenn sie durch das Entkuppeln weiterhin in Betrieb bleiben. Für diese Fälle ist in Weiterbildung der Erfindung vorgesehen, daß die kuppelbare Baueinheit eine eigene Energieversorgungseinrichtung besitzt. Diese Energieversorgungseinrichtung kann beispielsweise aus einer Pufferbatterie bestehen.

Die mit der Erfindung erzielten Vorteile bestehen unter anderem auch darin, daß anläßlich einer Neuprogrammierung beziehungsweise anläßlich einer neuen Einstellung prinzipielle Schaltungsfehler und damit prinzipielle Fehlprogrammierungen und Fehleinstellungen vermieden werden können, weil mehrere Sätze im Herstellerwerk vorbereiteter austauschbarer Baueinheiten vorrätig gehalten werden können, von denen dann immer nur die jeweils geeignete auszuwählen und umzustecken ist.

Ein Ausführungsbeispiel der Erfindung ist in den Zeichnungen dargestellt. Die Erfindung wird anhand dieses Ausführungsbeispiels noch näher beschrieben und erläutert.

Fig. 1    zeigt die Seitenansicht eines Arbeitsgeräts in Gestalt einer Pumpe für den Heizungs- und Sanitärbereich.

Fig. 2    zeigt die Seitenansicht einer an das in Fig. 1 dargestellte Arbeitsgerät ankuppelbaren Baueinheit.

Fig. 3    zeigt die Ansicht der in Fig. 2 dargestellten Baueinheit von der Steckerseite her.

Fig. 4    zeigt das elektrische Schaltbild des in Fig. 1 dargestellten Arbeitsgerätes.

In Fig. 5 sind mehrere Schaltungsmöglichkeiten zur Abwandlung der in Fig. 4 dargestellten Schaltung durch das Bilden unterschiedlicher Schaltungsbrücken im Inneren der in Fig. 2 und 3 dargestellten Baueinheit veranschaulicht.

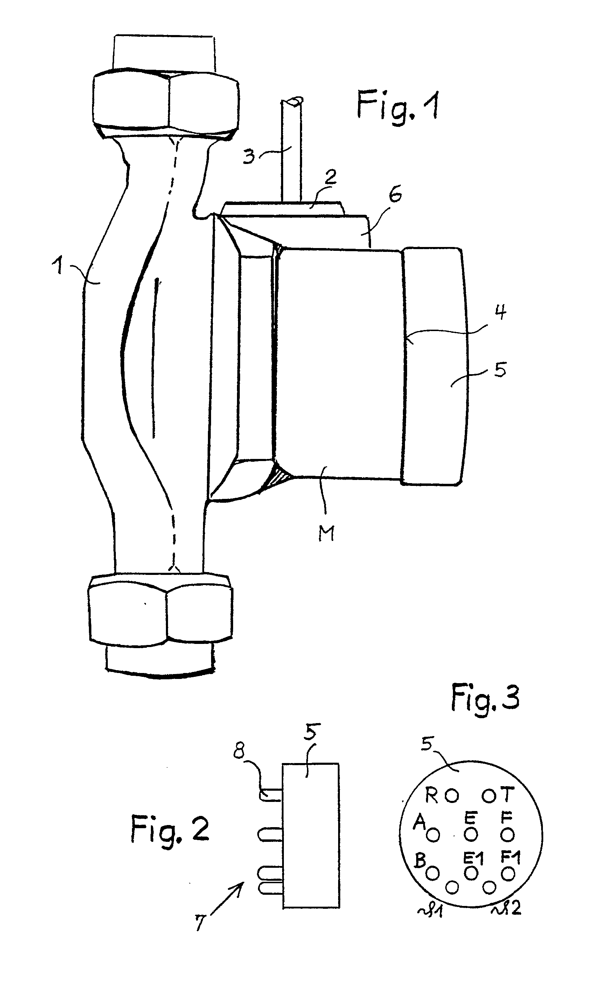

Fig. 1 zeigt ein Arbeitsgerät in Gestalt einer Wasserpumpe 1, wie sie im Heizungs- und Sanitärbereich beispielsweise für das Umwälzen von Heißwasser im Kreislauf verwendet wird. Die Wasserpumpe 1 besitzt einen angeflanschten Elektromotor M, eine Anschlußstelle 2 für ein Kabel 3, das Energieleitungen enthält, und eine weitere Anschlußstelle 4, an der eine Baueinheit 5 lösbar mit dem Arbeitsgerät 1 beziehungsweise dessen Motor M verbunden ist. Das Arbeitsgerät 1 enthält außerdem einen Thermostaten 6, der die Wassertemperatur mißt.

Die Baueinheit 5 ist gemäß Fig. 2 durch eine Schnellkupplungseinrichtung 7 mit dem auch den Motor M umfassenden Arbeitsgerät 1 verbunden. Die Schnellkupplungseinrichtung 7 besteht aus insgesamt zehn Steckkontakten 8, die an der Baueinheit 5 Steckerstifte bilden, die in Steckbuchsen passen, welche in Fig. 1 jedoch nicht sichtbar sind.

Die Baueinheit 5 enthält Programmier- und Einstelleinrichtungen, auf die später noch näher eingegangen wird.

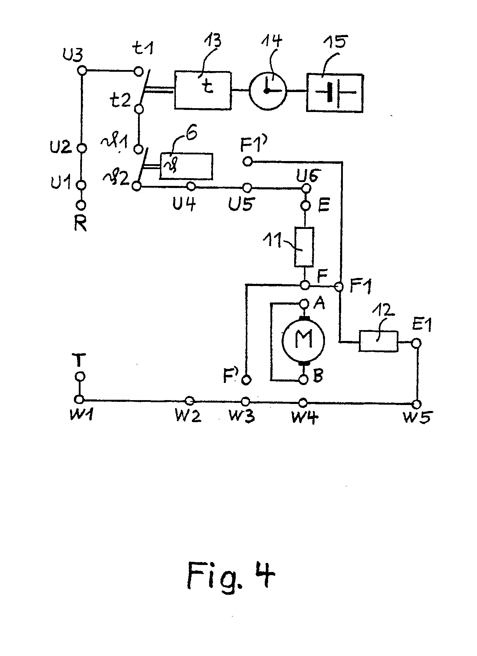

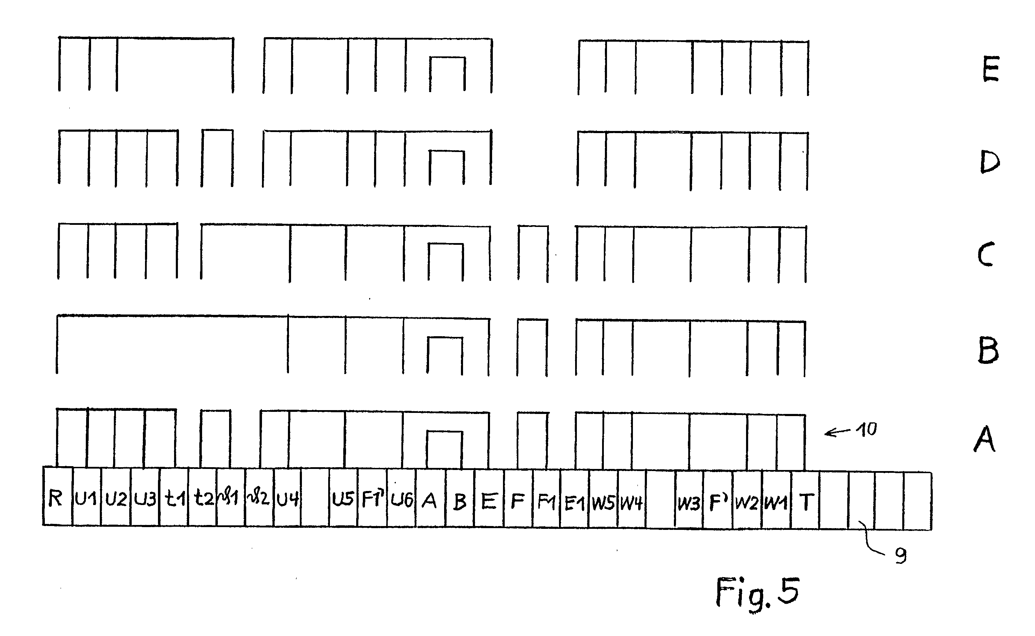

Die Baueinheit 5 enthält unter anderem eine in Fig. 5 abgebildetet Klemmleiste 9, von der insgesamt 25 Klemmen belegt sind. Diese Klemmen sind nach Fig. 5A durch Brücken 10 in bestimmter Weise miteinander verbunden, so daß sich die Schaltungsanordnung nach Fig. 4 ergibt. Von den in Fig. 4 dargestellten Bauteilen befinden sich der Thermostat 6 und der Elektromotor M mit seinen beiden Statorwicklungen 11 und 12 außerhalb der Baueinheit 5 im Arbeitsgerät 1. Alle übrigen Bauteile befinden sich im Inneren der an- und abkuppelbaren Baueinheit 5.

Nach Fig. 4 und Fig. 5A ist der Motor M der Wasserpumpe 1 als ein integral geregelter Thomsonmotor mit Thermostatsteuerung in Reihenschaltung mit einem Zeitschaltwerk ausgebildet. An das Zeitschaltwerk 13 ist eine programmierbare Zeitschaltuhr 14 angeschlossen, die als Gangreserve eine Energieversorgungseinrichtung 15 in Form einer Pufferbatterie besitzt.

Die Brücken 10 sind so geschaltet, daß von der Klemme R eine Verbindung zur Klemme t1 des Zeitschaltwerks 13 besteht. Vom der Klemme t2 des Zeitschaltwerks 13 besteht eine Verbindung zur Klemme Theta 1 des Thermostaten 6. Von dessen zweiter Klemme Theta 2 besteht eine Brückenverbindung zur Klemme E der Statorwicklung 11 des Motor M. Von deren Klemme F besteht eine Brücke zur Klemme F1 der zweiten Statorwicklung 12. Deren zweite Klemme E1 ist mit der Klemme T verbunden.

Die Energieleitungen des an der Anschlußstelle 2 endenden Kabels 3 sind im Inneren des Arbeitsgeräts 1 zu dessen zweiter Anschlußstelle 4 weitergeführt, wo sie über Steckkontakte 8 der Schnellkupplungseinrichtung 7 gemäß Fig. 3 Verbindung mit den Klemmen R und T der Baueinheit 5 haben.

Der Rotor des Motors M ist ebenfalls über Steckkontakte 8 an die Klemmen A und B der Baueinheit 5 angeschlossen, wo er gemäß Fig. 4 und Fig. 5A durch eine Brücke kurzgeschlossen ist.

Fig. 3 zeigt, daß auch die Klemmen E und F der Statorwicklung 11 und die Klemmen E1 und F1 der Statorwicklung 12 über Steckkontakte 8 angeschlossen sind. Auch die Klemmen Theta 1 und Theta 2 des Thermostaten 6 sind über Steckkontakte 8 geführt.

Der Motor M kann erst dann anlaufen, wenn das Zeitschaltwerk 13 seinen Kontakt geschlossen hat, das heißt während der an der Zeitschaltuhr 14 eingestellten Zeiten. Außerdem kann der Motor M auch nur dann anlaufen, wenn der Thermostat 6 seinen Kontakt geschlossen hat. Dies ist bei Überschreiten beziehungsweise Unterschreiten bestimmter Temperaturgrenzen der Wassertemperatur der Fall. Diese Temperaturgrenzen sind am Thermostaten 6 fest eingestellt und sie richten sich danach, ob die Pumpe 1 im Heizungsbetrieb oder im Warmwasserversorgungsbetrieb eingesetzt wird.

Beim Anlaufen reagiert der Motor M bei sprunghaftem Anstieg der Eingangsspannung mit einem stetigen Anstieg des Drehmoments nach Art eine Integral-Reglers. Strom und Drehzahl nehmen stetig zu, bis der durch die gewählte oder geregelte Spannung bedingte Grenzwert erreicht ist.

Fig. 5 zeigt in den Varianten B, C, D und E weitere Schaltungsmöglichkeiten.

Nach Fig. 5B sind der Thermostat 6 und das Zeitschaltwerk 13 außer Funktion. Das Drehmoment des Motors M folgt jeder Spannungsänderung ebenfalls nach Art eines Integral-Reglers.

Bei der Schaltungsvariante nach Fig. 5C ist lediglich der Thermostat 5 außer Betrieb, das Zeitschaltwerk 13 dagegen bleibt in Betrieb. Auch hierbei verhält sich der Motor M wie ein Integral-Regler.

Bei der Schaltungsvariante nach Fig. 5D sind Thermostat 6 und Zeitschaltwerk 13 in Betrieb. Abweichend von der Schaltung nach Fig. 5A liegen die Statorwicklungen 11 und 12 des Motors M jedoch nicht in Reihe, sondern parallel. Die Verbindung zwischen den Klemmen F und F1 ist aufgehoben. Dafür ist die Klemme U5 mit der Klemme F1' und die Klemme W3 mit der Klemme F' verbunden.

Die Schaltungsvariante nach Fig. 5E unterscheidet sich von der Schaltungsvariante nach Fig. 5D durch folgendes:

Das Zeitschaltwerk 13 ist außer Betrieb, weil über die Klemmen U1 und U2 eine direkte Verbindung zur Klemme Theta 1 geschaffen wurde.

Auf der Klemmleiste 9 sind noch verschiedene Klemmen unbesetzt, weil die Möglichkeit freigehalten werden soll, in der Baueinheit 5 noch weitere Bauteile oder Baugruppen unterzubringen, wie beispielsweise Kondensatoren oder Widerstände. Die Anlaufcharakteristik kann beispielsweise durch Vorschalten von Kondensatoren, Drosseln, Widerständen oder durch Vorschalten einer Parallelanordnung dieser Bauteile verändert werden. Hierdurch könnte der Motor M beispielsweise veranlaßt werden, sich statt wie ein Integral-Regler wie ein Proportional-Integral-Regler, ein Proportional-Differential-Regler oder wie ein Proportional-Integral-Differential-Regler zu verhalten. Außerdem könnte er dann in eine entsprechende Regelung einbezogen werden.

**Patentansprüche**

1. Arbeitsgerät mit einer programmierbaren und/oder einstellbaren Steuereinrichtung und mit einer Anschlußstelle für Energieleitungen, die zur Versorgung des Arbeitsgerätes und gegebenenfalls auch der Steuereinrichtung für eine feste oder lösbare Verbindung zwischen einer Energieliefereinrichtung und dem Arbeitsgerät bestimmt sind,
   **dadurch gekennzeichnet,**
   daß zumindest der die Programmier- und/oder Einstelleinrichtung (14, 9) aufweisende Teil der Steuereinrichtung (Fig. 4) als eine separate Baueinheit (5) ausgebildet und an einer weiteren Anschlußstelle (4) durch eine Schnellkupplungseinrichtung (7) mit dem Arbeitsgerät (1) lösbar verbunden ist.

2. Arbeitsgerät nach Anspruch 1, dadurch gekennzeichnet, daß die Schnellkupplungseinrichtung (7) Steckkontakte aufweist.

3. Arbeitsgerät nach Anspruch 1 oder 2, dadurch gekennzeichnet, daß die kuppelbare Baueinheit (5) eine eigene Energieversorgungseinrichtung (15) besitzt.

Fig. 1

Fig. 3

Fig. 2

Fig. 4

Fig. 5